# EUROPÄISCHE PATENTSCHRIFT

(11) **EP 2 678 178 B1**
(45) Veröffentlichungstag und Bekanntmachung des Hinweises auf die Patenterteilung: **08.04.2015**
(21) Anmeldenummer: 12706545.6
(22) Anmeldetag: 23.02.2012
(51) Int. Cl.: B60J 10/08

(54) **ANORDNUNG ZUR ABDICHTUNG VON LEITUNGSSCHNITTSTELLEN IN EINEM KRAFTFAHRZEUG**
ARRANGEMENT FOR SEALING LINE INTERFACES IN A MOTOR VEHICLE
AGENCEMENT POUR ÉTANCHÉIFIER DES INTERFACES ENTRE CONDUITS DANS UN VÉHICULE AUTOMOBILE

(30) Priorität: 23.02.2011 DE 102011004560
(43) Veröffentlichungstag der Anmeldung: 01.01.2014
(73) Patentinhaber: MAHLE Behr GmbH & Co. KG, 70469 Stuttgart (DE)
(72) Erfinder: GRIEB, Andreas, 70499 Stuttgart (DE); WUSTLICH, Kai, 73773 Aichwald (DE); SCHALL, Matthias, 73760 Ostfildern-Ruit (DE)
(74) Vertreter: Grauel, Andreas
(86) Internationale Anmeldenummer: PCT/EP2012/053115
(87) Internationale Veröffentlichungsnummer: WO 2012/113893

(56) Entgegenhaltungen:
- DE-A1- 19 738 825
- FR-A1- 2 380 911
- GB-A- 2 317 643

## Beschreibung

Die Erfindung betrifft eine Anordnung zur Abdichtung von Leitungsschnittstellen in einem Kraftfahrzeug, bei welchem zumindest eine Leitung aus dem Motorraum des Kraftfahrzeuges in einen Fahrzeuginnenraum geführt ist, wobei der Motorraum durch eine Trennwand vom Fahrzeuginnenraum getrennt ist, welche eine Öffnung aufweist, durch die die zumindest eine Leitung geführt ist und die Öffnung fahrzeuginnenraumseitig durch eine Dichtung verschlossen ist, die an einer, im Fahrzeuginnenraum angeordneten Funktionseinheit befestigt ist.

Eine solche Anordnung wird beispielweise in der GB 2 317 643 beschrieben.

In einem Kraftfahrzeug sind Funktionseinheiten im Fahrzeuginnenraum angeordnet, die für ihre Betriebsweise über Leitungen mit Bauteilen verbunden werden müssen, die im Motorraum des Kraftfahrzeuges angeordnet sind. Beispielsweise sind Medienleitungen, welche ein Kältemittel oder Kühlwasser führen, von einem Klimagerät, das im Fahrzeuginnenraum positioniert ist, zum Motorraum zu führen, da z.B. Teile der Kühlvorrichtungen in der Nähe des Motors angeordnet sind. Im Allgemeinen ist der Motorraum von dem Fahrzeuginnenraum durch eine Trennwand getrennt, welche eine Öffnung in Form eines Durchbruches aufweist, durch den die Medienleitungen, welche das Kältemittel oder das Kühlwasser transportieren, hindurchgeführt werden.

Um zu verhindern, dass Staub, Feuchtigkeit, Gerüche, aber auch eine Geräuschbelästigung aus dem Motorraum in den Fahrzeuginnenraum gelangen, ist die Öffnung in der Trennwand zwischen Motorraum und Fahrzeuginnenraum durch eine oder mehrere Dichtungen verschlossen. Neben der Funktion der Abdichtung muss die Dichtung weiter in der Lage sein, beim Einbau der Funktionseinheit Montagetoleranzen zwischen Funktionseinheit und der Trennwand in alle Raumrichtungen auszugleichen, ohne dass ihre eigentliche Funktionalität beeinträchtigt wird. Dabei ist der Ausgleich der Montagetoleranzen in Fahrtrichtung des Kraftfahrzeuges kritisch, da viele Dichtungen ihre Dichtfunktion durch Verpressen des Dichtungsmaterials erzeugen. Das bedeutet, dass im gesamten Bereich der Montagetoleranzen eine Mindestverpressung gewährleistet sein muss, um die Dichtfunktion zu gewährleisten. Des Weiteren dürfen aber auch die an der Dichtung angreifenden Verpresskräfte nicht zu groß werden, da durch eine zu große Verformung der Dichtung diese ihre Dichtfunktion wiederum einbüßt. Da der Ausgleich der Montagetoleranzen in Fahrtrichtung, welcher typischerweise in der Kompressionsrichtung der Dichtung liegt, einen starken Einfluss auf die Funktionalität der Dichtung hat, muss bei der Auswahl des Materials für die Dichtung berücksichtigt werden, ob die Dichtung ihre Dichtfunktion bei der vorhandenen auszugleichen Montagetoleranz auch zuverlässig gewährleisten kann. Dies schränkt die Auswahl der möglichen Dichtungsmaterialien stark ein und hat weiterhin auch Auswirkung auf das mögliche Dichtungsdesign.

Der Erfindung liegt somit die Aufgabe zugrunde, eine Anordnung zur Abdichtung von Leitungsschnittstellen in einem Kraftfahrzeug anzugeben, bei welchem eine zuverlässige Dichtfunktion ungeachtet der auszugleichenden Montagetoleranz erreicht wird.

Erfindungsgemäß wird die Aufgabe dadurch gelöst, dass ein, die Dichtung tragender Flansch der Funktionseinheit beweglich gegenüber der Funktionseinheit ausgebildet ist oder die Dichtung beweglich an dem starr an der Funktionseinheit befestigten Flansch angeordnet ist. Dies hat den Vorteil, dass eine Entkopplung der Dichtungsfunktion von dem Ausgleich der Montagetoleranz der Funktionseinheit in Fahrtrichtung des Kraftfahrzeuges erreicht wird. Die Dichtung erfüllt dabei lediglich die Funktion der Abdichtung der Öffnung in der Trennwand des Kraftfahrzeuges, während die Beweglichkeit der Dichtung bzw. die Beweglichkeit des Flansches für den Ausgleich der Montagetoleranz der Funktionseinheit in Fahrtrichtung verantwortlich sind. Durch die so eingestellte optimale Dichtfähigkeit der Dichtung wird sichergestellt, dass keine Luft und Wasser aus dem Motorraum in Richtung Fahrzeuginnenraum eindringen kann und eine ausreichende akustische Dämmung zwischen Motorraum und Fahrzeuginnenraum gewährleistet wird, damit kein störender Lärm aus dem Motorraum in den Fahrzeuginnenraum übertragen wird.

Vorteilhafterweise ist die Dichtung an einem Schlitten befestigt, welcher beweglich zur Längsausdehnung des starr an der Funktionseinheit angeordneten Flansches gelagert ist, der vorzugsweise annähernd senkrecht zur Öffnung der Trennwand ausgebildet ist. Mit Hilfe des beweglichen Schlittens wird dabei der Ausgleich der Montagetoleranz sichergestellt, welche beim Einbau der Funktionseinheit in das Kraftfahrzeug notwendigerweise ausgeglichen werden muss. Erst wenn durch die Verschiebung des fest an der Funktionseinheit angeordneten Flansches unterhalb des Schlitten annähernd der Ausgleich der Montagetoleranz eingestellt ist, erfolgt die Verpressung der Dichtung an der Trennwand durch die Bewegung des Schlittens in Richtung Trennwand, so dass aufgrund der lediglich auszuführenden Dichtfunktion Dichtungen, die aus den verschiedensten Dichtungsmaterialien bestehen, eingesetzt werden können, wobei immer eine definierte Verpressung der Dichtung erfolgt, die die gewünschte optimale Funktionalität in jedem Fall sicherstellt. Dichtungen können dabei aus Schäumen oder gummiähnlichen Materialien oder aus einer Kombination von mehreren Werkstoffen wie Schaum, Kunststoff oder Metall zusammengesetzt sein. Somit wird die zuverlässige Dichtfunktion hinsichtlich Wasser, Luft und teilweise auch die akustische Abschirmung durch all diese verschiedenen Dichtungsmaterialien gewährleistet, ohne dass die Dichtungsmaterialien über einen weiten Verpressungsbereich dicht sein müssen.

In einer Ausgestaltung weist der Flansch ein Fixierelement auf, an welchem der Schlitten nach erfolgter Abdichtung der Öffnung der Trennwand arretierbar ist. Dies hat den Vorteil, dass nach erfolgter Abdichtung der Flansch die einmal eingestellte Position nicht mehr verlassen kann und die Abdichtung zuverlässig gewährleistet wird. Ein Ausgleich der Montagetoleranzen in Y-bzw. Z-Richtung, die senkrecht zur Fahrtrichtung des Kraftfahrzeuges stehen, ist dabei typischerweise unkritisch, da hier die Dichtung um die Toleranzen in diesen Richtungen größer als die Öffnung in der Trennwand dimensioniert werden muss. Der Ausgleich dieser Montagetoleranzen hat keine Auswirkung auf die eigentliche Funktionalität der Dichtung.

In einer Weiterbildung ist zwischen dem Schlitten und dem Flansch eine Zusatzdichtung angeordnet. Diese Zusatzdichtung dient insbesondere zur Abdichtung der im Innenraum des gehäusefesten Flansches geführten Leitungen gegenüber den Verunreinigungen des Motorraumes.

Um die Dichtfunktion zuverlässig und konstruktiv ohne großen Aufwand ausführen zu können, ist die Dichtung an einem, der Trennwand gegenüberliegenden Steg des Schlittens befestigt. Somit wird dann, wenn die Montagetoleranz zwischen der Funktionseinheit und der Trennwand durch den Flansch ausgeglichen werden soll, die Dichtung bereits in Richtung der Trennwand bewegt und dort zuverlässige gegen die Trennwand verpresst. Dadurch wird die Anzahl von Arbeitsschritten bei der Montage der Funktionseinheit im Kraftfahrzeug verringert.

In einer Variante ist an dem, der Trennwand gegenüberliegenden Steg des Schlittens oberhalb der Dichtung ein Abstandshalter angeordnet. Dieser Abstandshafter ist so dimensioniert, dass er dem optimalen Verpressungsgrad der Dichtung gegenüber der Trennwand entspricht, so dass der maximale Dichteffekt bei der Verpressung der Dichtung mit der Trennwand eingestellt wird.

In einer Ausgestaltung weist die Dichtung eine Verlängerung auf, welche zumindest teilweise zu einer, dem Schlitten abgewandten Seite des Flansches verläuft und wenigstens eine Leitung kontaktiert. Durch diese Anordnung kann auf die Zusatzdichtung verzichtet werden, da die nur eine Dichtung sowohl die Öffnung in der Trennwand als auch die Leitungen, welche durch die Öffnung geführt sind, gegen Verunreinigungen aus dem Motorraum schützt. Die Dichtung zur Trennwand und zu den Leitungen ist dabei einteilig gestaltet und gewährleistet den Ausgleich der Montagetaleranz durch Gleiten der gesamten Dichtung entlang der Leitungen.

In einer Weiterbildung weist die Verlängerung der Dichtung, insbesondere auf der von dem Schlitten abgewandten Seite des Flansches, einen Faltenbalg auf. Dieser Faltenbalg hat den Vorteil, dass der Teil der Dichtung, welcher die Leitung kontaktiert, starr an dem gehäusefesten Flansch und der Leitung fixiert ist, so dass die Gleitbewegung der Dichtung an der Leitung unterbunden wird. Der Faltenbalg dient dabei bei der Bewegung des Flansches zum Ausgleich der Montagetoleranz, da nur der Teil der Dichtung relativ zu der Trennwand bewegt wird, welche vor dem Faltenbalg angeordnet ist. Die starre Verbindung des Endes der Dichtung an der Leitung führt damit zu einer Erhöhung des Dichtungseffektes der gegebenen Anordnung.

In einer Variante ist an dem Schlitten oder der Dichtung ein griffähnliche Element angeordnet, welches durch die Öffnung der Trennwand in den Motorraum ragt. Mittels dieses griffähnlichen Elementes lässt sich die Montage der Dichtung und der Ausgleich der Montagetoleranz einfach aus dem Motorraum heraus realisieren, da dort üblicherweise wesentlich mehr Platz für auszuführende Montagehandgriffe vorhanden ist als im Fußraum des Fahrzeuginnenraumes.

Das Element kann weiterhin auch mit einer Soll-Bruchstelle ausgestattet sein, welche das Aufbringen einer definierten Kraft sicherstellt. Ist die geforderte Mindestanpresskraft erreicht, reißt das griffähnliche Element ab. Dies kann weiterhin auch zur Qualitätssicherung eingesetzt werden. Ist das Element noch vorhanden bedeutet dies, die Dichtung ist noch nicht in Sollposition. Ist das Element nicht mehr vorhanden bedeutet dies, die Dichtung ist korrekt montiert.

In einer weiteren Variante sind die Leitungen als Medienleitungen ausgeführt, die zur Versorgung der Funktionseinheit, insbesondere einem Klimagerät, mit flüssigen Medien dienen. Aufgrund der erfindungsgemäßen Lösung wird insbesondere bei dem Einsatz von Medienleitungen, welche flüssige Medien wie Kältemittel oder Kühlwasser aus dem Motorraum in den Fahrzeuginnenraum und wieder zurück transportieren, eine zuverlässige Abdichtung des Motorraumes zum Fahrzeuginnenraum gewährleistet.

Die Erfindung lässt zahlreiche Ausführungsformen zu. Eine davon soll anhand der in der Zeichnung dargestellten Figuren näher erläutert werden.

Es zeigt:
- Figur 1:: ein erstes Ausführungsbeispiel der erfindungsgemäßen Anordnung mit einer mehrteiligen Dichtung
- Figur 2:: ein zweites Ausführungsbeispiel der erfindungsgemäßen Anordnung mit einer einteiligen Dichtung
- Figur 3:: ein drittes Ausführungsbeispiel der erfindungsgemäßen Anordnung mit einer einteiligen Dichtung und einem Faltenbalg
- Figur 4:: Dichtung bei der Montage aus einer maximalen Distanz von der Trennwand
- Figur 5:: Dichtung bei der Montage bei einer minimalen Distanz zur Trennwand

Gleiche Merkmale sind mit gleichen Bezugszeichen gekennzeichnet.

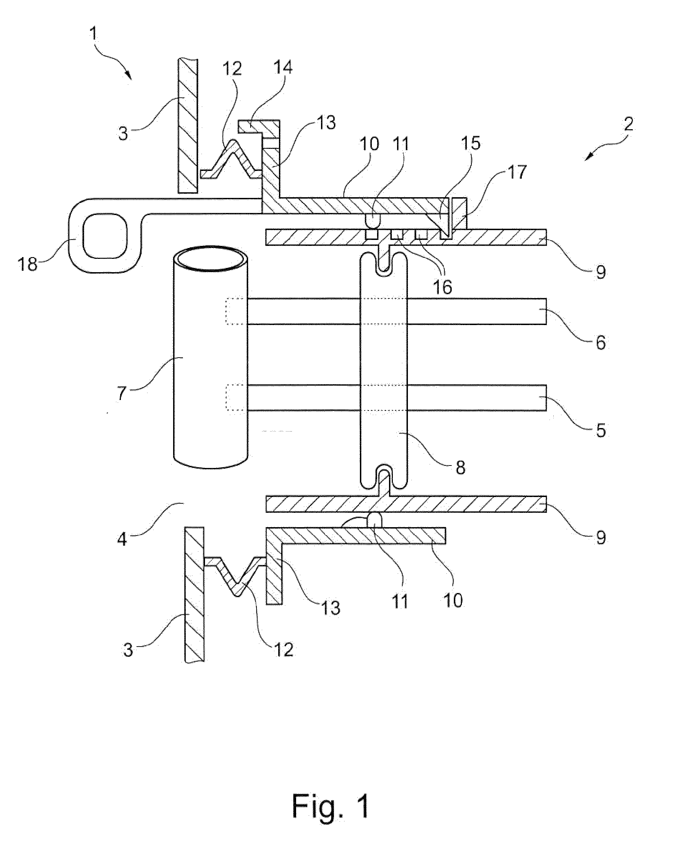

In Figur 1 ist ein erstes Ausführungsbeispiel der Anordnung zur Abdichtung von Leitungsschnittstellen in einem Kraftfahrzeug in einem Querschnitt dargestellt, welcher sich entlang der Fahrtrichtung des Kraftfahrzeuges erstreckt. Die Leitungen sind als Medienleitungen ausgebildet. Das Kraftfahrzeug besteht aus einem Motorraum 1 und einem Fahrzeuginnenraum 2. Der Motorraum 1 und der Fahrzeuginnenraum 2 sind durch eine Trennwand 3 getrennt, welche eine Öffnung 4 aufweist, durch welche sich die Medienleitungen 5, 6 aus dem Motorraum 1 in den Fahrzeuginnenraum 2 erstrecken. Die Medienleitungen 5, 6 enthalten Kühlwasser bzw. Kältemittel und werden einem nicht weiter dargestellten Klimagerät zugeführt, welches im Fahrzeuginnenraum unterhalb des Cockpits angeordnet ist. Die Medienleitungen 5 und 6 werden dabei über einem Adapter 7 an die Anschlüsse im Motorraum 1 angeschlossen. Die Medienleitungen 5 und 6 werden in einen, hohlen Flansch 9 eingeführt, welcher fest mit dem nicht weiter dargestellten Klimagerät verbunden ist. Der Flansch 9 kann zylinderförmig mit rundem, quadratischen oder rechteckigem Querschnitt ausgeführt sein. Um den Flansch 9 erstreckt sich der Außenkontur folgend ein an diesem beweglich gelagerter Schlitten 10, wobei zwischen dem Schlitten 10 und dem Flansch 9 eine Zusatzdichtung 11 angeordnet ist. Diese Zusatzdichtung 11 dient dabei zur Abdichtung zwischen dem Schlitten 10 und dem Flansch 9.Innerhalb des Flansches 9 befindet sich ein Dichtelement 8, das zwischen Flansch 9 und den Medienleitungen 5 und 6 abdichtet.

Der Schlitten 10 umschließt annähernd den gesamten Flansch 9 und erstreckt sich in der Längsausdehnung des Flansches 9, wobei der Schlitten 10 in dieser Richtung beweglich ausgebildet ist. An der, der Trennwand 3 gegenüberliegenden Seite weist der Schlitten 10 einen parallel zur Trennwand 3 verlaufenden Steg 13 auf, an welchem ein Abstandshalter 14 in Richtung der Trennwand 3 abgewinkelt ist. Unterhalb des Abstandshalters 14 ist an der Frontfläche des Steges 13 eine Dichtung 12 angeordnet, welche im verpressten Zustand die gesamte Öffnung 4 der Trennwand 3 umschließt.

Zur Bewegung des Schlittens 10 weist dieser ein griffähnliches Element 18 auf, welches durch die Öffnung 4 der Trennwand 3 hindurch in den Motorraum 1 greift und als Verlängerung des Schlittens 10 ausgebildet ist. Zur Montage des Klimagerätes wird aus Richtung des Motorraumes 1 das griffähnliche Element 18 in Richtung des Motorraumes 1 bewegt, wodurch der Schlitten 10 sich bewegt und die Dichtung 12 verpresst wird. Der Ausgleich der Montagetoleranz erfolgt beim Einbau des Klimagerätes in dem Fahrzeuginnenraum durch die Relativbewegung des Flansches 9 zu dem Schlitten 10. Die an dem Steg 13 des Schlittens 10 befestigte Dichtung 12, wird dabei gegen die Trennwand 3 verpresst und zwar so weit, bis der Abstandshalter 14, welcher in Richtung der Trennwand 3 weist, die Trennwand 3 berührt. Mit dem Abstandshalter 14 wird die gewünschte Verpressung der Dichtung 12 zur Trennwand 3 eingestellt. Damit wird der maximale Dichteffekt der Dichtung 12 erreicht und eine zuverlässige Abdichtung des Motorraumes 1 gegenüber dem Fahrzeuginnenraum 2 eingestellt.

Um diese Position fest zu verankern, ist an der, dem griffähnlichen Element 18 entgegengesetzten Seite des Schlittens 10 ein Vorsprung 15 ausgebildet, welcher in Richtung der Oberfläche des Flansches 9 zeigt. Die Oberfläche des Flansches 9 weist dabei mehrere Rasten 16 auf, wobei der Vorsprung 15 des Schlittens 10 je nach eingestellter Verpressung in der, der Position des Schlittens 10 entsprechenden Raste 16 des Flansches 9 verankert wird. Da bei der Montage des Klimagerätes der Schlitten 10 relativ zu dem starr an dem Klimagerät fixierten Flansch 9 und zur Trennwand 3 verschoben wird, wird durch die, dem Vorsprung 17 gegenüberliegende Raste 16 auch die Montagetoleranz fest eingestellt. Die Rasten 16 zur Fixierung des beweglichen Schlittens 10 arbeiten dabei nach dem gleichen Prinzip wie ein Kabelbinders. Darüber hinaus ist ein Anschlag 17 an dem Flansch 9 angeordnet, welcher hinter den Rasten 16 positioniert ist und der die Position des Schlittens 10 vor der Montage einstellt.

Bei dem beschriebenen ersten Ausführungsspiel gleitet der Schlitten 10 auf dem fest an dem Klimagerät angeordneten Flansch 9. Das in den Motorinnenraum 1 greifende griffähnliche Element 18 zum Bewegen des Schlittens 10 gewährleistet eine ausreichende Anpresskraft und eine Kontrolle der Montage. Dabei kann nach erfolgter Montage das griffähnliche Element 18, welches einfach in Form einer Lasche ausgebildet sein kann, abgetrennt werden, wenn die Dichtung 12 und das Klimagerät die richtige Position eingenommen haben.

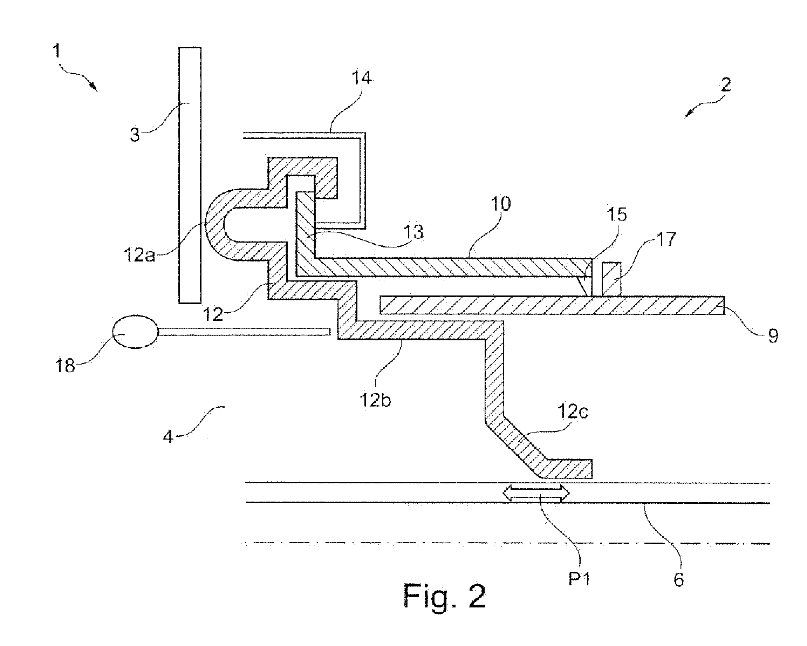

In Figur 2 ist ein zweites Ausführungsbeispiel der Erfindung dargestellt, wobei nur eine Hälfte des in Figur 1 dargestellten Aufbaus der Anordnung ausgeführt ist. Bei dieser Ausgestaltung ist die Dichtung 12 ebenfalls an einem Schlitten 10 befestigt, welcher parallel zu dem gehäusefest an dem, nicht weiter dargestellten Klimagerät angeordneten Flansch 9 beweglich angeordnet ist. Die Dichtung 12 ist dabei einteilig ausgebildet, wobei auf die in Figur 1 dargestellte Zusatzdichtung 11 und das Dichtelement 8 verzichtet werden kann. Die Dichtung 12 besteht aus mehreren Abschnitten und weist an der Frontfläche des Steges 13 des Schlittens 10 einen C-förmigen Teil 12a auf, welcher die Abdichtung gegenüber der Trennwand 3 wahrnimmt. Dieses C-förmige Teil 12a ist um das freie Ende des Stegs 13 herum geschlagen und an diesem befestigt. Ausgehend von dem C-förmigen Teil 12a verläuft die Dichtung 12 stufenähnlich unterhalb des Schlittens 10 und greift dann mit einem zweiten Teil 12b in den Innenraum des hohlen Flansches 9 ein, in welchem auch die Medienleitungen, von welchen lediglich die Medienleitung 6 dargestellt ist, verlaufen. An dem Teil 12b, der zu der, dem Schlitten 10 abgewandten Seite des Flansches 9 annähernd parallel gestaltet ist und frei beweglich verläuft, schließt sich ein fußähnlicher Teil 12c an, welcher mit der Medienleitung 6 kontaktiert ist und eine Abdichtung zu dieser bildet.

Bei der Bewegung des Schlittens 10 gleitet die einteilig gestaltete Dichtung 12 mit ihrem fußähnlichen Teil 12c auf der Medienleitung 6 entlang. Durch das Gleiten der gesamten Dichtung 12 entlang der Medienleitung 6 erfolgt der Ausgleich der Montagetoleranz beim Einbau des nicht weiter dargestellten Klimagerätes in den Fahrzeuginnenraum, was durch den Pfeil P1 angedeutet ist. Dichtung 12 und Schlitten 10 bilden dabei einen integrierten Bestandteil, wobei der Abstandshalter 14 zur Sicherstellung der gewünschten Verpressung des ersten Teils 12a der Dichtung 12 an der Trennwand 3 eine hakenähnliche Form aufweist, wobei dieser Abstandshalter 14 von der, dem ersten Teil 12a der Dichtung 12 abgewandten Seite des Steges 13 ausgeht und durch zweimalige Abwinklung um annähernd 90° den ersten Teil 12a der Dichtung 12 überragt.

Das griffähnliche Element 18 ist dabei als Verlängerung des zweiten Teiles 12b der Dichtung 12 ausgeführt und ragt auch in diesem Fall durch die Öffnung 4 der Trennwand 3 in den Motorraum 1. Da die im Zusammenhang mit Figur 2 dargestellte Dichtung 12 fest mit dem Schlitten 10 verbunden ist, wird durch die Bewegung des griffähnlichen Elementes 18 in Richtung Motorraum sowohl der Schlitten 10 als auch die Dichtung 12 in Richtung Trennwand 3 bewegt, wobei die Dichtung 12 entlang der Medienleitung 6 gleitet. Schlitten 10 und Dichtung 12 bestehen dabei aus unterschiedlichen Materialien. Während sowohl der Schlitten 10 als auch der Flansch 9 aus einem festen Material, vorzugsweise einem Kunststoff, aufgebaut sind, besteht die Dichtung 12 aus einem elastischen Werkstoff, vorteilhafterweise einem Gummi.

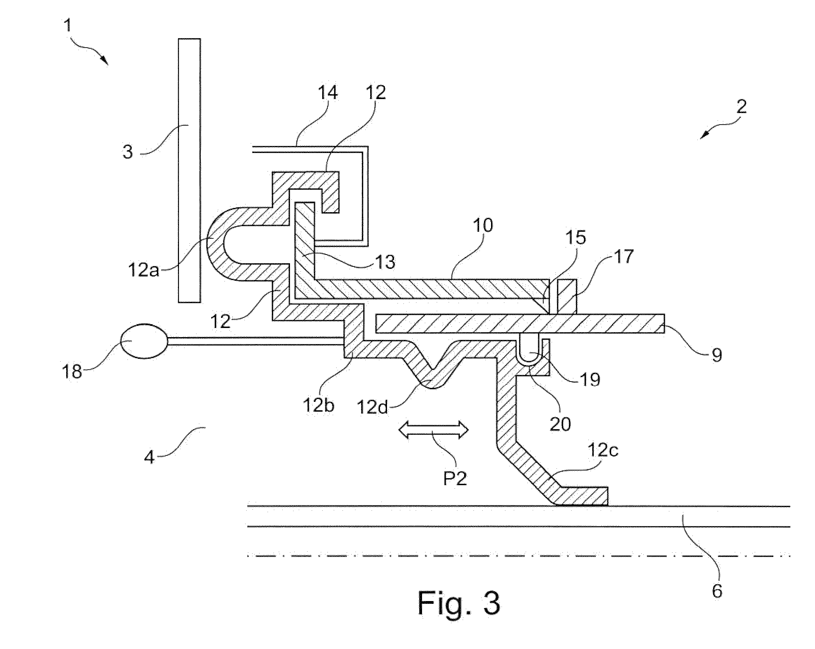

Figur 3 zeigt ein drittes Ausführungsbeispiel, bei welchem die Dichtung 12 ebenfalls einteilig ausgebildet ist, welche sich von dem Ausführungsbeipiel gemäß Figur 2 dadurch unterscheidet, dass der zweite Teil 12b der Dichtung 12, welcher annähernd parallel zum Flansch 9 frei beweglich gestaltet ist, einen Faltenbalg 12d aufweist. Das Fußteil 12c der Dichtung 12 ist dabei starr an der Medienleitung 6 fixiert. Weiterhin weist die Dichtung 12 gegenüber dem Fußteil 12c eine Aufnahme 20 auf, in die ein Vorsprung 19 eingreift, der an der, dem Schlitten 10 abgewandten Innenseite des Flansches 9 ausgebildet ist. Die Dichtung 12 ist dadurch sowohl an dem gehäusefesten Flansch 9 als auch an der Medienleitung 6 fest verankert, so dass ein Verschieben der Dichtung 12 auf der Medienleitung 6 zuverlässig verhindert wird.

Wird nun das griffähnliche Element 18, welches wiederum durch die Öffnung 4 der Trennwand 3 in den Motorraum 1 hineinragt, in Richtung Motorraum 1 gezogen, so wird der Faltenbalg 12d auseinander gezogen, wobei der fußähnliche Teil der Dichtung 12 in seiner einmal eingenommenen Position verharrt. Durch den Faltenbalg 12d erfolgt somit der bei der Montage einzustellende Ausgleich der Montagetoleranz des Klimagerätes, was durch den Pfeil P2 verdeutlicht wird.

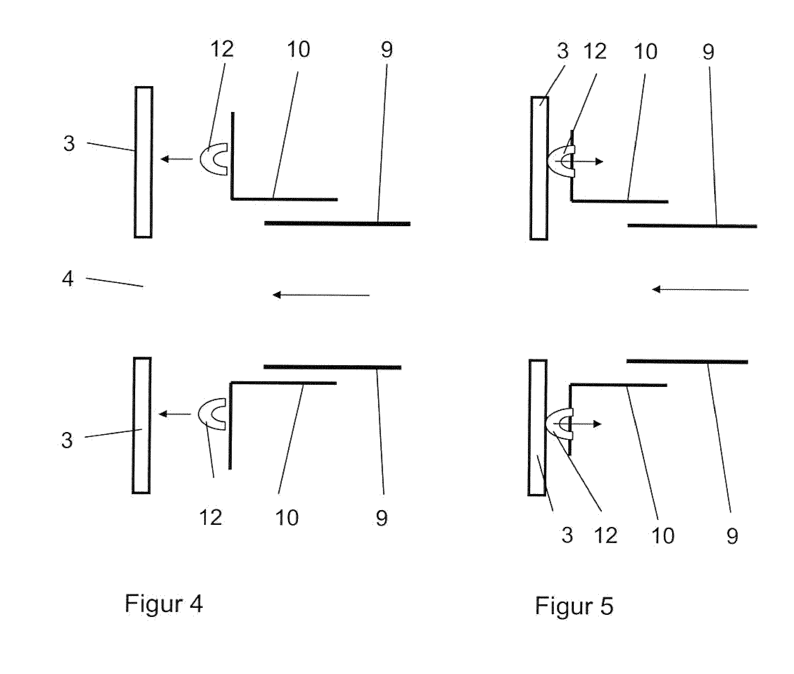

In den Figuren 4 und 5 ist schematisch die Montagesequenz der in den vorhergehenden Abschnitten beschriebenen Anordnungen dargestellt. Dabei sind zum einfacheren Verständnis lediglich die Trennwand 3, die Öffnung 4, der Schlitten 10, die Dichtung 12 und der Flansch 9 dargestellt. Bei der Montage sind zwei Vorgehensweisen denkbar. In einer ersten Variante ist in der Figur 4 die Dichtung 12 in einer Parkposition gelagert, wobei ein maximaler Abstand zur Trennwand 3 vorhanden ist. Diese Lage wird insbesondere in den Figuren 1 bis 3 genutzt. Nach der Montage des Klimagerätes wird zum Ausgleich der Montagetoleranzen die Dichtung 12 bzw. der Schlitten 10 relativ zum Flansch 9 nach vorn in die gewünschte Position gezogen, was durch die Pfeile in Richtung der Trennwand charakterisiert ist.

Bei der in Figur 5 dargestellten Position befindet sich die Dichtung 12 bereits direkt an der Trennwand 3. Bei der Montage des Klimagerätes wird die Dichtung 12 gleichzeitig in die richtige Position, weg von der Trennwand 3, verschoben, während der starr mit dem Klimagerät verbundene Flansch 9 auf die Trennwand 3 zu bewegt wird. Dadurch ist kein zusätzlicher Arbeitsschritt notwendig, um sowohl das Klimagerät in der gewünschten Montagetoleranz zu justieren als auch die Dichtung 12 in die gewünschte Verpressung zu bringen. Zur Aufrechterhaltung der Presskraft auf der Dichtung 12 sind der Flansch 9 bzw. der Schlitten 10 mit einer geeigneten Fixiervorrichtung 15, 16 versehen, welche z.B. eine Verrastung ähnlich dieser an einen Kabelbinder oder eine Verschraubung, Verstiftung oder eine ähnlich geeignete Fixiermaßnahme sein kann. Auch ist der Einsatz von federähnlichen Elementen vorstellbar. Weiterhin muss der verschiebbare Bereich so gestaltet sein, dass auch hier die Forderungen bezüglich Dichtheit und Akustik eingehalten werden.

Die erfindungsgemäße Lösung ermöglicht die Aufteilung der Funktion der Abdichtung und den Ausgleich der Montagetoleranz in Fahrtrichtung an der Nledienschnittstelle auf verschiedene Bauteile. Dies gestattet den Einsatz einer Vielzahl von Dichtungsmaterialien für die Abdichtung der Medienschnittstelle und stellt die Funktionalität der Dichtung unabhängig von der aktuellen Toleranzlage des Klimagerätes im Fahrzeug sicher.

## Patentansprüche

1. Anordnung zur Abdichtung von Leitungsschnittstellen in einem Kraftfahrzeug, wobei die Anordnung eine Funktionseinheit und eine Dichtung (12) umfasst, wobei bei dem Kraftfahrzeug zumindest eine Leitung (5, 6) aus einem Motorraum (1) des Kraftfahrzeuges in einen Fahrzeuginnenraum (2) geführt ist, wobei der Motorraum (1) durch eine Trennwand (3) vom Fahrzeuginnenraum (2) getrennt ist, welche eine Öffnung (4) aufweist, durch die die zumindest eine Leitung (5, 6) geführt ist und die Öffnung (4) fahrzeuginnenraumseitig durch die Dichtung (12) verschlossen ist, die an der im Fahrzeuginnenraum anordenbaren Funktionseinheit befestigt ist, **dadurch gekennzeichnet, dass** ein, die Dichtung (12) tragender Flansch (9) der Funktionseinheit beweglich gegenüber der Funktionseinheit ausgebildet ist oder die Dichtung (12) beweglich an dem starr an der Funktionseinheit befestigten Flansch (9) angeordnet ist.

2. Anordnung nach Anspruch 1, **dadurch gekennzeichnet, dass** die Dichtung (12) an einem Schlitten (10) befestigt ist, welcher beweglich zur Längsausdehnung des starr an der Funktionseinheit angeordneten Flansches (9) gelagert ist, welcher vorzugsweise annähernd senkrecht zur Öffnung (4) der Trennwand (3) ausgebildet ist.

3. Anordnung nach Anspruch 2, **dadurch gekennzeichnet, dass** der Flansch (9) ein Fixierelement (16) aufweist, an welchem der Schlitten (10) nach erfolgter Abdichtung der Öffnung (4) der Trennwand (3) arretierbar ist.

4. Anordnung nach Anspruch 2 oder 3, **dadurch gekennzeichnet, dass** zwischen dem Schlitten (10) und dem Flansch (9) eine Zusatzdichtung (11) angeordnet ist.

5. Anordnung nach Anspruch 2, 3 oder 4, **dadurch gekennzeichnet, dass** die Dichtung (12) an einem, der Trennwand (3) gegenüberliegenden Steg (13) des Schlittens (10) befestigt ist.

6. Anordnung nach Anspruch 5, **dadurch gekennzeichnet, dass** an dem, der Trennwand (3) gegenüberliegenden Steg (13) des Schlittens (10), oberhalb der Dichtung (12) ein Abstandshalter (14) angeordnet ist.

7. Anordnung nach Anspruch 5 oder 6, **dadurch gekennzeichnet, dass** die Dichtung (12) eine Verlängerung (12b, 12c) aufweist, welche zumindest teilweise zu einer, dem Schlitten (10) abgewandten Seite des Flansches (9) verläuft und wenigstens eine Leitung (6) kontaktiert.

8. Anordnung nach Anspruch 7, **dadurch gekennzeichnet, dass** die Verlängerung (12b, 12c) der Dichtung (12), insbesondere auf der, dem Schlitten (10) abgewandten Seite des Flansches (9), einen Faltenbalg (12d) aufweist,

9. Anordnung nach einem der Ansprüche von 2 bis 8, **dadurch gekennzeichnet, dass** an dem Schlitten (10) oder an der Dichtung (12) ein griffähnliches Element (18) angeordnet ist, welches durch die Öffnung (4) der Trennwand (3) in den Motorraum (1) ragt.

10. Anordnung nach mindestens einem der vorhergehenden Ansprüche, **dadurch gekennzeichnet, dass** die zumindest eine Leitung (5, 6) als Medienleitungen ausgebildet ist, die zur Versorgung der Funktionseinheit, insbesondere einer Klimaanlage, mit flüssigen Medien dienen.

## Claims

1. An arrangement for sealing line interfaces in a motor vehicle, wherein the arrangement comprises a functional unit and a seal (12), wherein, in the motor vehicle, at least one line (5, 6) from an engine compartment (1) of the motor vehicle is routed into a vehicle interior (2), wherein the engine compartment (1) is separated from the vehicle interior (2) by a partition (3) which has an opening (4) through which the at least one line (5, 6) is routed and the opening (4) is closed on the vehicle interior side by the seal (12) which is fastened to the functional unit, which can be arranged in the vehicle interior, **characterized in that** a flange (9) of the functional unit bearing the seal (12) is configured to be movable relative to the functional unit or the seal (12) is moveably arranged on the flange (9) which is rigidly fastened to the functional unit.

2. The arrangement as claimed in claim 1, **characterized in that** the seal (12) is fastened to a slide (10) which is mounted so as to be movable relative to the longitudinal extension of the flange (9), which is rigidly arranged on the functional unit and which is preferably configured approximately perpendicular to the opening (4) of the partition (3).

3. The arrangement as claimed in claim 2, **characterized in that** the flange (9) comprises a fixing element (16) on which the slide (10) can be blocked after the opening (4) of the partition (3) has been sealed.

4. The arrangement as claimed in claim 2 or 3, **characterized in that** an additional seal (11) is arranged between the slide (10) and the flange (9).

5. The arrangement as claimed in claim 2, 3 or 4, **characterized in that** the seal (12) is fastened to a projection (13) of the slide (10) opposing the partition (3).

6. The arrangement as claimed in claim 5, **characterized in that** a spacer (14) is arranged above the seal (12) on the projection (13) of the slide (10) opposing the partition (3).

7. The arrangement as claimed in claim 5 or 6, **characterized in that** the seal (12) has an extension (12b, 12c) which extends at least partially on one side of the flange (9) remote from the slide (10) and comes into contact with at least one line (6).

8. The arrangement as claimed in claim 7, **characterized in that** the extension (12b, 12c) of the seal (12), in particular on the side of the flange (9) remote from the slide (10), has a folding bellows (12d).

9. The arrangement as claimed in any one of claim 2 to 8, **characterized in that** a grip-like element (18) is arranged on the slide (10) or on the seal (12), said grip-like element protruding through the opening (4) of the partition (3) into the engine compartment (1).

10. The arrangement as claimed in at least one of the preceding claims, **characterized in that** the at least one line (5, 6) is configured as media lines which serve for supplying the functional unit, in particular an air conditioning unit, with liquid media.

## Revendications

1. Agencement pour assurer l'étanchéité de points d'intersection de conduites dans un véhicule automobile, où l'agencement comprend une unité fonctionnelle et un joint d'étanchéité (12) où, concernant le véhicule automobile, au moins une conduite (5, 6) est guidée, partant d'un compartiment moteur (1) du véhicule automobile et passant dans un habitacle (2) du véhicule, où le compartiment moteur (1) est séparé de l'habitacle (2) du véhicule par une paroi de séparation (3) qui présente une ouverture (4) à travers laquelle est guidée la conduite (5, 6) au moins au nombre de un, et l'ouverture (4) est obturée, côté habitacle du véhicule, par le joint d'étanchéité (12) qui est fixé sur l'unité fonctionnelle pouvant être disposée dans l'habitacle du véhicule,
**caractérisé en ce qu'**une bride (9) de l'unité fonctionnelle supportant le joint d'étanchéité (12) est configurée en étant mobile par rapport à l'unité fonctionnelle, ou bien le joint d'étanchéité (12) est disposé en étant mobile sur la bride (9) fixée de manière rigide sur l'unité fonctionnelle.

2. Agencement salon la revendication 1, **caractérisé en ce que** le joint d'étanchéité (12) est fixé sur un coulisseau (10) qui est montré en étant mobile par rapport à l'étendue longitudinale de la bride (9) disposée de manière rigide sur l'unité fonctionnelle, laquelle bride est configurée en étant de préférence presque perpendiculaire à l'ouverture (4) de la paroi de séparation (3).

3. Agencement selon la revendication 2, **caractérisé en ce que** la bride (9) présente un élément de fixation (16) sur lequel peut être bloqué le coulisseau (10), une fois que l'étanchéité de l'ouverture (4) de la paroi de séparation (3) a été assurée.

4. Agencement selon la revendication 2 ou 3, **caractérisé en ce qu'**un joint d'étanchéité supplémentaire (11) est disposé entre le coulisseau (10) et la bride (9).

5. Agencement selon la revendication 2, 3 ou 4, **caractérisé en ce que** le joint d'étanchéité (12) est fixé sur un bras (13) du coulisseau (10) faisant face à la paroi de séparation (3).

6. Agencement selon la revendication 5, **caractérisé en ce qu'**une entretoise (14) est disposée au-dessus du joint d'étanchéité (12), sur le bras (13) du coulisseau (10) faisant face à la paroi de séparation (3).

7. Agencement selon la revendication 5 ou 6, **caractérisé en ce que** le joint d'étanchéité (12) présente une extension (12b, 12c) qui s'étend au moins partiellement dans la direction d'un côté de la bride (9) opposé au coulisseau (10) et vient au contact d'au moins une conduite (6).

8. Agencement selon la revendication 7, **caractérisé en ce que** l'extension (12b, 12c) du joint d'étanchéité (12) présente, en particulier, un soufflet (12d) placé sur le côté de la bride (9) opposé au coulisseau (10).

9. Agencement selon l'une quelconque des revendications 2 à 8, **caractérisé en ce qu'**un élément (18) en forme de poignée est disposé sur le coulisseau (10) ou sur le joint d'étanchéité (12), lequel élément pénètre dans le compartiment moteur (1) en passant à travers l'ouverture (4) de la paroi de séparation (3).

10. Agencement selon au moins l'une quelconque des revendications précédentes, **caractérisé en ce que** la conduite (5, 6) au moins au nombre de un est conçue comme l'une des conduites de milieux en circulation qui servent à l'alimentation, en milieux liquides, de l'unité fonctionnelle, en particulier d'un système de climatisation.
